# EUROPEAN PATENT APPLICATION

(11) **EP 3 869 466 A1**
(43) Date of publication of application: **25.08.2021**
(21) Application number: 21158731.6
(22) Date of filing: 23.02.2021
(51) Int. Cl.: G06T 11/00

(54) **METHOD AND DEVICE FOR PICTURE GENERATION, ELECTRONIC DEVICE, AND STORAGE MEDIUM**

(30) Priority: 24.02.2020 CN 202010112938; 24.02.2020 CN 202010113023
(71) Applicant: GUANGDONG OPPO MOBILE TELECOMMUNICATIONS CORP., LTD., Dongguan Guangdong 523860 (CN)
(72) Inventor: CHEN, Deyin, Dongguan, Guangdong 523860 (CN); LI, Yichang, Dongguan, Guangdong 523860 (CN); ZHAO, Wenhui, Dongguan, Guangdong 523860 (CN)
(74) Representative: Mewburn Ellis LLP

(57) **Abstract**

A method and device for picture generation, an electronic device, and a storage medium are provided. The method is applicable to an electronic device and includes the following. Image information of a reference picture is obtained, and texture information and color information of the image information are extracted. A picture corresponding to the texture information is obtained as a picture to-be-processed. The picture to-be-processed is processed based on the color information to generate a target picture.

## Description

### TECHNICAL FIELD

This disclosure relates to the technical field of electronic devices, and particularly to a method and device for picture generation, an electronic device, and a storage medium.

### BACKGROUND

With the development of science and technology, electronic devices are becoming increasingly popular, and functions of the electronic devices have become diversified, so that the electronic device has become an essential part in people's daily life. At present, a displayed picture of the electronic device (e.g., a desktop, wallpaper, etc.) can be replaced automatically or replaced according to a user's choice. However, the number of display pictures that can be replaced is small and the form is fixed, which results in poor personalization and poor user experience.

### SUMMARY

In a first aspect of the disclosure, a method for picture generation is provided. The method is applicable to an electronic device and includes the following. Image information of a reference picture is obtained, and texture information and color information of the image information are extracted. A picture corresponding to the texture information is obtained as a picture to-be-processed. The picture to-be-processed is processed based on the color information to generate a target picture.

In a second aspect of the disclosure, an electronic device is provided. The electronic device includes a memory and a processor. The memory is coupled with the processor and stores a program. The program includes instructions which, when executed by the processor, cause the processor to execute the foregoing method.

In a third aspect of the disclosure, a non-transitory computer-readable storage medium is provided. The non-transitory computer-readable storage medium stores a computer program which, when executed by a processor, causes the processor to execute the foregoing method.

### BRIEF DESCRIPTION OF THE DRAWINGS

In order to describe technical solutions of implementations of the disclosure more clearly, the following will give a brief description of accompanying drawings used for describing the implementations. Apparently, accompanying drawings described below are merely some implementations. Those of ordinary skill in the art can also obtain other accompanying drawings based on the accompanying drawings described below without creative efforts.
FIG. 1 is a schematic flowchart illustrating a method for picture generation according to some implementations.
FIG. 2 is a schematic flowchart illustrating a method for picture generation according to other implementations.
FIG. 3 is a schematic flowchart illustrating a method for picture generation according to other implementations.
FIG. 4 is a schematic diagram illustrating an interface of an electronic device according to some implementations.
FIG. 5 is a schematic flowchart illustrating operations at block S303 of the method for picture generation illustrated in FIG. 3 according to some implementations.
FIG. 6 is a schematic diagram illustrating an interface of an electronic device according to other implementations.
FIG. 7 is a schematic flowchart illustrating operations at block S307 of the method for picture generation illustrated in FIG. 3 according to some implementations.
FIG. 8 is a schematic diagram illustrating an interface of an electronic device according to other implementations.
FIG. 9 is a schematic flowchart illustrating a method for picture generation according to other implementations.
FIG. 10 is a sequence diagram illustrating a method for picture generation according to other implementations.
FIG. 11 is a schematic flowchart illustrating a method for picture generation according to other implementations.
FIG. 12 is a schematic flowchart illustrating a method for picture generation according to other implementations.
FIG. 13 is a schematic flowchart illustrating a method for picture generation according to other implementations.
FIG. 14 is a schematic flowchart illustrating a method for picture generation according to other implementations.
FIG. 15 is a schematic flowchart illustrating a method for picture generation according to other implementations.
FIG. 16 is a schematic flowchart illustrating a method for picture generation according to other implementations.
FIG. 17 is a schematic flowchart illustrating a method for picture generation according to other implementations.
FIG. 18 is a schematic flowchart illustrating a method for picture generation according to other implementations.
FIG. 19 is a schematic diagram illustrating a smart-watch dial interface according to some implementations.
FIG. 20 illustrates a smart watch according to some implementations.
FIG. 21 illustrates a system for generating a smart-watch dial interface according to some implementations.
FIG. 22 is a block diagram illustrating a device for picture generation according to some implementations.
FIG. 23 is a block diagram illustrating an electronic device configured to execute a method for picture generation according to some implementations.
FIG. 24 illustrates a storage unit configured to store or carry a program code for implementing a method for picture generation according to some implementations.

### DETAILED DESCRIPTION

In order for those skilled in the art to better understand technical solutions of the disclosure, technical solutions in implementations of the disclosure will be described in a clear and comprehensive manner with reference to accompanying drawings intended for the implementations.

With the development of electronic device technology, more and more electronic devices can support replacement of a displayed picture. For example, more and more electronic devices support replacement of a desktop, wallpaper, and a theme. However, the inventor found that when replacing a displayed picture of an electronic device, the display pictures that can be replaced are usually pictures locally stored in the electronic device, which are small in number and fixed in form, resulting in poor user experience.

In view of the above deficiencies, after a lot of researches, the inventor has found and proposed a method and device for picture generation, an electronic device, and a storage medium of the implementations of the disclosure, which can obtain a picture to-be-processed based on texture information of image information, and can generate a target picture by processing, based on color information of the image information, the picture to-be-processed, so that the generated target image is more consistent with the image information in terms of characteristics, which satisfies user's personalized needs, thereby improving user experience.

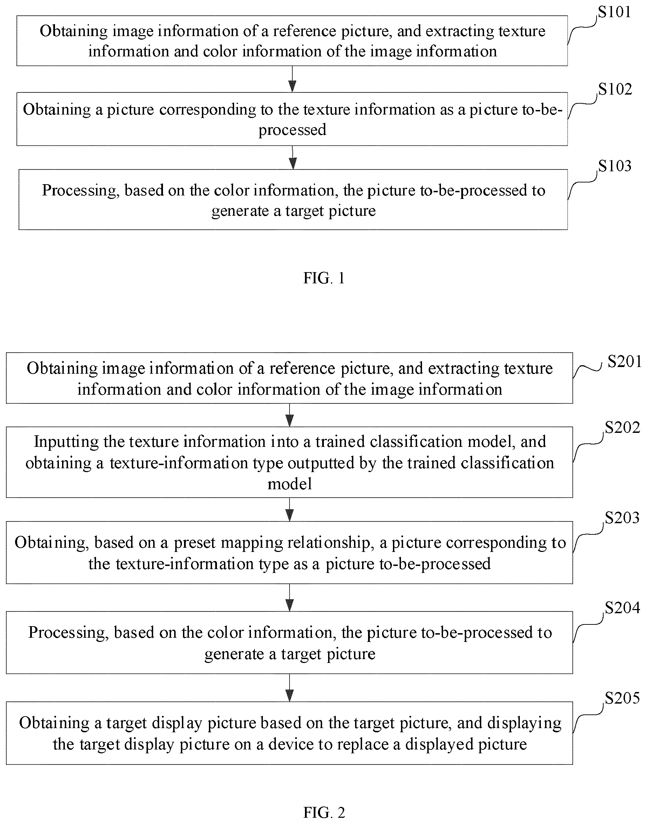

FIG. 1 is a schematic flowchart illustrating a method for picture generation according to some implementations. The method is used to obtain the picture to-be-processed based on the texture information of the image information, and generate the target picture by processing, based on the color information of the image information, the picture to-be-processed, so that the generated target image is more consistent with the image information in terms of characteristics, which can satisfy user's personalized needs and improve user experience.

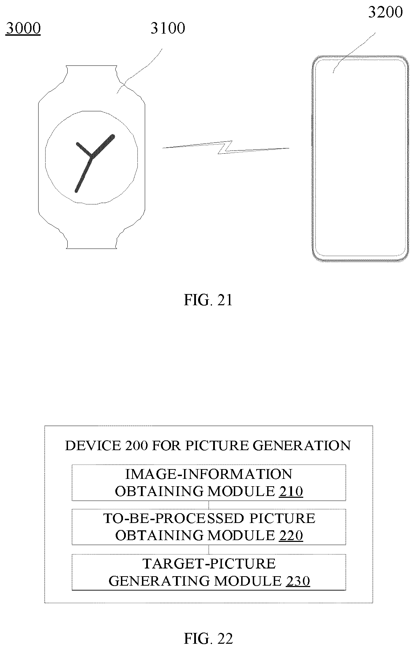

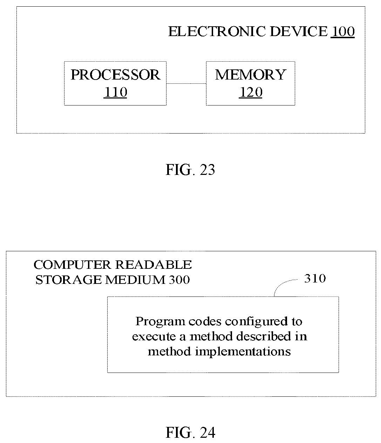

In some implementations, the method for picture generation is applicable to a device 200 for picture generation (FIG. 22) and applicable to an electronic device 100 (FIG. 23) provided with the device 200. The following will take an electronic device as an example for illustration. The electronic device of the implementations may include a desktop computer, a smart phone, a tablet computer, a wearable electronic device, and so on, which is not limited herein. Detailed descriptions will be given below with reference to operations illustrated in FIG. 1. The method for picture generation includes the following.

At block S101, image information of a reference picture is obtained, and texture information and color information of the image information are extracted.

The reference picture herein may be any picture, and may be selected or set by a user. As an example, a picture is selected by the user from multiple stored pictures as the reference picture, or a partial region of the picture is selected as the reference picture. As another example, a photo taken by a camera of a mobile terminal or a partial region of the photo is used as the reference picture. As still another example, a photo taken by a smart watch equipped with a camera or a partial region of the photo is used as the reference picture.

In this implementation, the electronic device can obtain the image information. In some implementations, the electronic device may obtain the image information locally. For example, the electronic device obtains the image information from a local photo album. Image information in the photo album may be obtained by saving it after shooting with a camera, or obtained by saving it after downloading from the Internet, which is not limited in the disclosure. In some implementations, the electronic device may obtain the image information from a server. For example, the electronic device downloads the image information from the server via a data network or a wireless network, which is not limited in the disclosure. In some implementations, the electronic device may collect and obtain the image information in real time. For instance, the electronic device collects and obtains the image information through a camera, which is not limited in the disclosure. In this implementation, the electronic device may also obtain the image information in other manners, which will not be repeated herein.

In this implementation, after obtaining the image information, the electronic device can extract the texture information of the image information. The texture information generally refers to image textures, and represents a feature of textures of the reference picture. The image textures are visual features that reflect homogeneity of an image and reflect organization and arrangement properties of a surface structure with slow or periodical change. A type of the texture information includes pure color, grid, stripe, complex, or other feature types. The pure color means that there is no texture on the reference picture. The complex means that the reference picture has textures which are not pure color, grid, stripe. Textures include three characteristics: constant repetition of some local sequence, nonrandom arrangement, and texture area of approximately unity uniform. In some implementations, after the electronic device obtains the image information, the texture information of the image information can be extracted by a statistical method, a geometric method, a model method, a signal processing method, and a structural method, which is not limited in the disclosure. As an implementation, after obtaining the image information, the electronic device sequentially performs on the image information grayscale processing, normalization processing, and SVM model matching, to output and obtain the texture information of the image information.

In this implementation, after obtaining the image information, the electronic device can extract the color information of the image information. The color information herein may include, but is not limited to, red, yellow, green, blue, white, black, and so on. In some implementations, after the electronic device obtains the image information, the color information of the image information can be extracted by a general histogram method, a global cumulative histogram method, a local cumulative histogram method, a statistical feature method of the color parameters, a first-order matrix and a second-order matrix of the color, and a wavelet-based block image, which is not limited in the disclosure. As an implementation, after obtaining the image information, the electronic device sequentially performs on the image information HSV model conversion processing and color optimization processing of H channel values, and counts and sorts optimized H channel values, to obtain the most three colors as the color information of the image information.

In some implementations, after obtaining the image information, the electronic device first extracts the texture information of the image information and then extracts the color information of the image information, or first extracts the color information and then extracts the texture information, or synchronously extracts the color information and the texture information, and the disclosure does not limit an extraction order of the texture information and the color information.

At block S 102, a picture corresponding to the texture information is obtained as a picture to-be-processed.

The picture to-be-processed may be a picture set in advance. The picture to-be-processed may be a picture in scalable vector graphic (SVG) format. The picture to-be-processed can be used to generate a smart-watch dial interface. The picture to-be-processed may include no color, that is, the picture to-be-processed only includes a picture frame without filling colors.

In some implementations, a picture corresponding to the texture information is obtained based on a preset mapping relationship as a picture to-be-processed.

The electronic device can predetermine and store a mapping relationship table as the preset mapping relationship, where the preset mapping relationship includes a correspondence between multiple pieces of texture information and multiple pictures. In the preset mapping relationship, the multiple pieces of texture information are in one-to-one correspondence with the multiple pictures, or some pieces of texture information correspond to one picture, or one piece of texture information corresponds to some pictures, which is not limited herein.

For example, as illustrated in Table 1, the texture information of the image information includes first texture information, second texture information, third texture information, and fourth texture information, and the multiple pictures include a first picture, a second picture, a third picture, and a fourth picture. The first texture information corresponds to the first picture, the second texture information corresponds to the second picture, the third texture information corresponds to the third picture, and the fourth texture information corresponds to the fourth picture.

**Table 1**

| texture information | picture |
|---|---|
| first texture information | first picture |
| second texture information | second picture |
| third texture information | third picture |
| fourth texture information | fourth picture |

In some implementations, after obtaining the texture information of the image information, a picture corresponding to the texture information is obtained according to a preset mapping relationship as a picture to-be-processed. Specifically, after the texture information is obtained, the texture information is compared with multiple pieces of texture information in the preset mapping relationship, to determine a piece of texture information matching the obtained texture information (i.e., the texture information of the image information) from the multiple pieces of texture information. Then a picture corresponding to the texture information matching the obtained texture information in the preset mapping relationship is obtained. The obtained picture corresponding to the texture information matching the obtained texture information is determined as the picture to-be-processed. In this way, the picture corresponding to the texture information of the image information can be obtained as the picture to-be-processed. As an example, after comparing the texture information of the image information with the multiple pieces of texture information in the preset mapping relationship, if the first texture information among the multiple pieces of texture information is determined to be matched with the texture information of the image information, the first picture corresponding to the first texture information in the preset mapping relationship is obtained, and the first picture is determined as the picture to-be-processed.

At block S 103, the picture to-be-processed is processed based on the color information to generate a target picture.

In this implementation, after obtaining the picture to-be-processed, the electronic device processes, based on the color information extracted from the image information, the picture to-be-processed to generate the target picture. In some implementations, a background color of the picture to-be-processed is replaced with the color information extracted from the image information to generate the target picture. The background color of the picture to-be-processed is yellow for example and the color information extracted from the image information is blue for example, the yellow background of the picture to-be-processed is replaced with a blue background to generate a target picture. In some implementations, the color information extracted from the image information is added to a foreground image of the picture to-be-processed, and a background color of the picture to-be-processed remains unchanged. For example, the background color of the picture to-be-processed is yellow, the foreground image includes a puppy, and the color information extracted from the image information is blue, blue is added to the puppy in the picture to-be-processed and keep the yellow background unchanged to generate a target picture. In this implementation, other manners of processing the picture to-be-processed based on the color information may be adopted, which will not be repeated herein.

According to the method for picture generation of the implementations of the disclosure, image information is obtained, and texture information and color information of the image information are extracted. A picture corresponding to the texture information is obtained as a picture to-be-processed. The picture to-be-processed is processed based on the color information to generate a target picture. In the disclosure, the picture to-be-processed can be obtained based on the texture information of the image information, and the target picture can be generated by processing, based on the color information of the image information, the picture to-be-processed, so that the generated target image is more consistent with the image information in terms of characteristics, which satisfies user's personalized needs, thereby improving user experience.

FIG. 2 is a schematic flowchart illustrating a method for picture generation according to other implementations. The method is applicable to the above electronic device. Detailed descriptions will be given below with reference to operations illustrated in FIG. 2. The method for picture generation includes the following.

At block S201, image information of a reference picture is obtained, and texture information and color information of the image information are extracted.

For details of operations at block S201, reference may be made to the related descriptions in operations at block S101, which will not be repeated herein.

At block S202, the texture information is inputted into a trained classification model, and a type of the texture information (i.e., a texture-information type) outputted by the trained classification model is obtained.

In some implementations, after extracting and obtaining the texture information of the image information, the electronic device can input the texture information into a trained classification model. The trained classification model is obtained through machine learning. Specifically, a training data set is collected (where attributes or features of one class of data in the training data set are different from these of another class of data), and then a neural network is trained and modeled according to a preset algorithm by inputting the collected training data set. In this way, rules can be summarized based on the training data set to obtain the trained classification model. In this implementation, one class of data in the training data set may include, for example, texture information of image information, and another class of data in the training data set may include, for example, the type of texture information, where the type of texture information includes pure color, grid, complex, and so on, which is not limited herein.

In some implementations, the trained classification model is locally stored in the electronic device after pre-training is completed. Based on this, after obtaining the texture information of the image information, the electronic device can directly call the trained classification model locally. For example, an instruction is sent directly to the trained classification model, to instruct the trained classification model to read the texture information from a target storage region, or the electronic device can directly input the texture information into the trained classification model stored locally. In this way, it is possible to effectively avoid reduction of a speed at which the texture information is input into the trained classification model due to influence of network factors, thereby improving a speed at which the trained classification model obtains the texture information and improving user experience.

In some implementations, after pre-training is completed, the trained classification model is stored in a server that is in communication with the electronic device. Based on this, after obtaining the texture information of the image information, the electronic device can send an instruction via a network to the trained classification model stored in the server, to instruct the trained classification model to read the texture information via the network, or the electronic device can send the texture information via a network to the trained classification model stored in the server. Accordingly, a storage space of the electronic device can be saved by storing the trained classification model in the server, thereby reducing impact on normal operations of the electronic device.

In some implementations, the disclosure further provides a method for training the classification model. The training of the classification model may be performed in advance according to an obtained training data set. Subsequently, when the type of the texture information needs to be obtained, the type of the texture information can be obtained through the classification model without training the classification model.

In implementations of the disclosure, a machine learning algorithm may be used to train a training data set of the electronic device to obtain a classification model. The machine learning algorithms may include: a neural network, a long short-term memory (LSTM) network, a threshold cycle unit, a simple cycle unit, an autoencoder, decision tree, random forest, feature mean classification, classification Regression tree, hidden Markov, a K-Nearest Neighbor (KNN) algorithm, a logistic regression model, a Bayesian model, a Gaussian model, Kullback-Leibler (KL) divergence, and so on, and the specific machine learning algorithm is not limited in the disclosure.

Hereinafter, training of an initial model based on a training data set is described, in which a neural network is taken as an example.

The texture information of the image information in a group of data in the training data set is used as an input sample (i.e., input data) of the neural network, and the type of the texture information marked in the group of data is used as an output sample (i.e., output data) of the neural network. Neurons in an input layer are fully connected with neurons in a hidden layer, and the neurons in the hidden layer are fully connected with neurons in an output layer, which can effectively extract potential features of different granularities. In addition, multiple hidden layers may be included, which is conducive to well fitting a non-linear relationship, thereby improving accuracy of the preset trained model.

The training of the classification model may be or may not be performed by the electronic device. When the training of the classification model is not performed by the electronic device, the electronic device is a direct user or an indirect user.

In some implementations, the classification model may periodically or irregularly obtain new training data for training, to update the classification model.

At block S203, a picture corresponding to the type of the texture information is obtained based on a preset mapping relationship as a picture to-be-processed.

In some implementations, the electronic device can predetermine and store a mapping relationship table as the preset mapping relationship, where the preset mapping relationship includes a correspondence between multiple types of texture information (i.e., multiple texture-information types) and multiple pictures. In the preset mapping relationship, the multiple types of texture information are in one-to-one correspondence with the multiple pictures, some types of texture information correspond to one picture, or one type of texture information corresponds to some pictures, which is not limited herein.

For example, as illustrated in Table 2, the multiple types of texture information include a first type, a second type, a third type, and a fourth type, and the multiple pictures include a first picture, a second picture, a third picture, and a fourth picture. The first type corresponds to the first picture, the second type corresponds to the second picture, the third type corresponds to the third picture, and the fourth type corresponds to the fourth picture.

**Table 2**

| type | picture |
|---|---|
| first type | first picture |
| second type | second picture |
| third type | third picture |
| fourth type | fourth picture |

In some implementations, after obtaining the type of texture information, a picture corresponding to the type of texture information is obtained according to a preset mapping relationship as a picture to-be-processed. Specifically, after the type of texture information is obtained, the type of texture information is compared with the multiple types in the preset mapping relationship, to determine a type matching the obtained type (i.e., the type of texture information) from the multiple types. Then a picture corresponding to the type matching the obtained type in the preset mapping relationship is obtained. The obtained picture corresponding to the type matching the type of texture information is determined as the picture to-be-processed. In this way, the picture corresponding to the texture information can be obtained as the picture to-be-processed. For example, after comparing the type of texture information with the multiple types in the preset mapping relationship, if the first type among the multiple types is determined to be matched with the type of texture information, the first picture corresponding to the first type in the preset mapping relationship is obtained, and the first picture is determined as the picture to-be-processed.

At block S204, the picture to-be-processed is processed based on the color information to generate a target picture.

For details of operations at block S204, reference may be made to the related descriptions in operations at block S103, which will not be repeated herein.

At block S205, a target display picture is obtained based on the target picture, and the target display picture is displayed on a device to replace a displayed picture.

In this implementation, after obtaining the target picture, the electronic device can obtain a target display picture based on the target picture. In some implementations, the target display picture obtained based on the target picture may use the target picture as an element or material, or may be the target picture itself. When the target display picture obtained uses the target picture as an element or material, the target display picture may include multiple elements, and the target picture is a part of the multiple elements. For example, the target display picture includes grassland, a cow, and a sheep, and the target picture is a cow. In this case, the target picture is a part of elements in the target display picture. When the target display picture obtained is the target picture, all contents of the target display picture are the same as all contents of the target picture. For example, the target display picture includes a cow and the target picture is a cow. In this case, the target display picture is the target picture itself.

In this implementation, after obtaining the target display picture, the electronic device can display the target display picture on a device to replace a displayed picture. The device herein (i.e., the device for replacing a displayed picture) may be the electronic device itself or other electronic devices, which is not limited in the disclosure.

In some implementations, the device is the electronic device itself, and a displayed picture of the electronic device is directly replaced with the target display picture. The displayed picture of the electronic device for example is sea and the target display picture for example is grassland, the displayed picture of the electronic device is changed from the sea to the grassland, to replace the displayed picture of the electronic device.

In some implementations, the device is another electronic device, and the electronic device sends the target display picture to the device through short-range communication technology, to instruct the device to display the target display picture. As an implementation, the electronic device sends the target display picture to the device through a Bluetooth technology, a ZigBee technology, etc., to instruct the device to display the target display picture. A displayed picture of another electronic device for example is sea and the target display picture for example is grassland, the electronic device sends the grassland data to another electronic device, to instruct another electronic device to change the displayed picture from the sea to the grassland, to replace the displayed picture of another electronic device.

In some implementations, when the device is another electronic device, another electronic device stores multiple pictures to-be-processed in advance. The electronic device sends a color parameter RGB of the target display picture to another electronic device through short-range communication technology, to instruct another electronic device to process the picture to-be-processed based on the received color parameter RGB to obtain the target picture, and generate and display the target display picture based on the target picture.

According to the method for picture generation of the implementations of the disclosure, image information is obtained, and texture information and color information of the image information are extracted. The texture information is inputted into a trained classification model, and a type of the texture information outputted by the trained classification model is obtained. A picture corresponding to the type of the texture information is obtained based on a preset mapping relationship as a picture to-be-processed. The picture to-be-processed is processed based on the color information to generate a target picture. A target display picture is obtained based on the target picture, and the target display picture is displayed on a device to replace a displayed picture. Compared with the method illustrated in FIG. 1, the target display picture can be obtained through the texture information and the color information of the image information in this implementation, to display the target display picture on the device, which can improve diversity of the displayed picture.

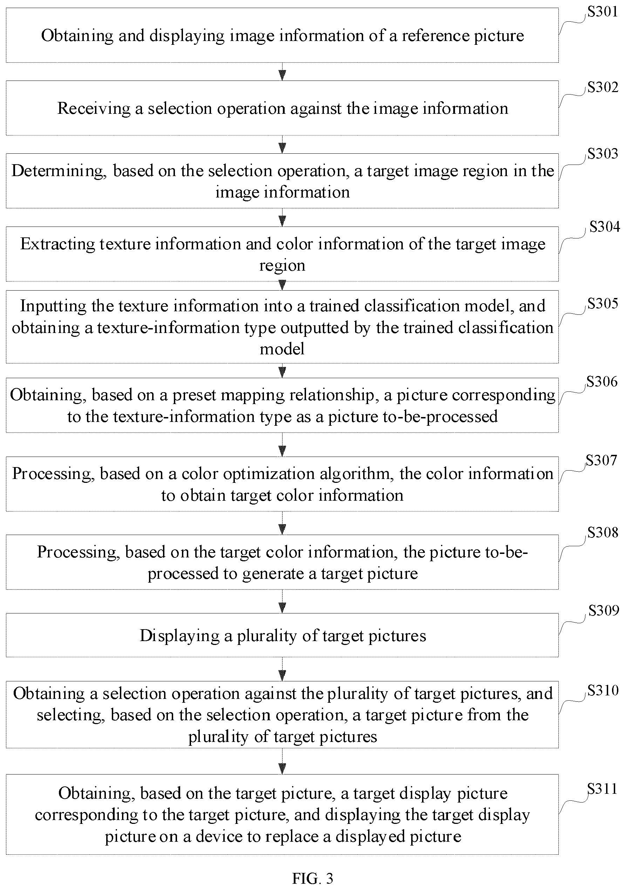

FIG. 3 is a schematic flowchart illustrating a method for picture generation according to other implementations. The method is applicable to the above electronic device. Detailed descriptions will be given below with reference to operations illustrated in FIG. 3. The method for picture generation includes the following.

At block S301, image information of a reference picture is obtained and displayed.

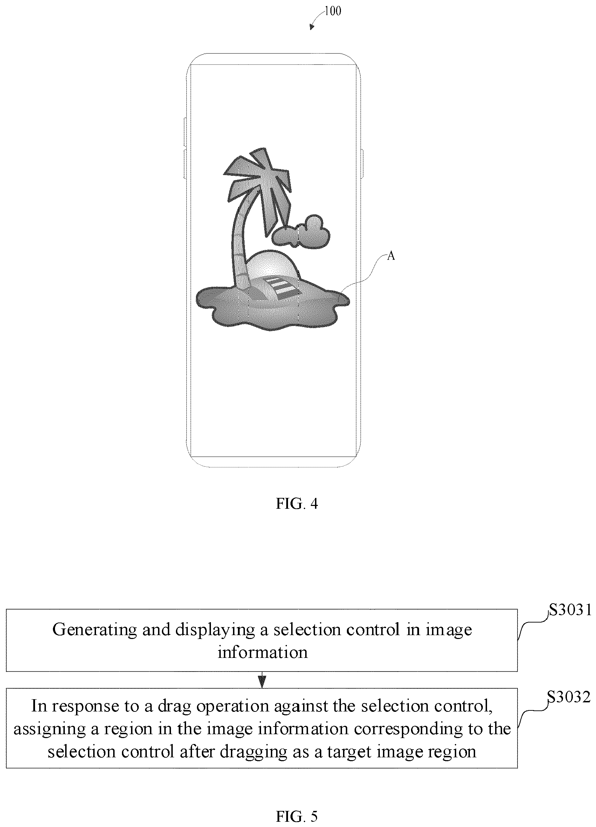

FIG. 4 is a schematic diagram illustrating an interface of an electronic device according to some implementations. As illustrated in FIG. 4, the electronic device displays the image information after obtaining the image information, where A in FIG. 4 represents the displayed image information. The electronic device may display the image information on full screen or non-full screen, which is not limited in the disclosure.

At block S302, a selection operation against the image information is received.

In some implementations, the electronic device can detect a selection operation against the image information during displaying the image information. When the selection operation against the image information is detected, the selection operation against the image information can be received. In this implementation, the selection operation acting on the image information may be triggered by a user's finger, triggered by a stylus, or triggered by an external device, and so on, which is not limited herein. In the case that the selection operation against image information is triggered by a user's finger, the selection operation may include a single-finger click operation, a multi-finger click operation, a single-finger pressing operation, a multi-finger pressing operation, a single-finger sliding operation, a multi-finger sliding operations, and the like, which is not limited in the disclosure.

At block S303, a target image region in the image information is determined based on the selection operation.

In some implementations, after receiving the selection operation against the image information, the electronic device determines, based on the selection operation, a target image region in the image information, where the target image region may be smaller than or equal to a region of the image information, so that a user's favorite region can be selected from the obtained image information.

FIG. 5 is a schematic flowchart illustrating operations at block S303 of the method for picture generation illustrated in FIG. 3 according to some implementations. Detailed descriptions will be given below with reference to operations illustrated in FIG. 5. The method includes the following.

At block S3031, a selection control is generated and displayed in the image information.

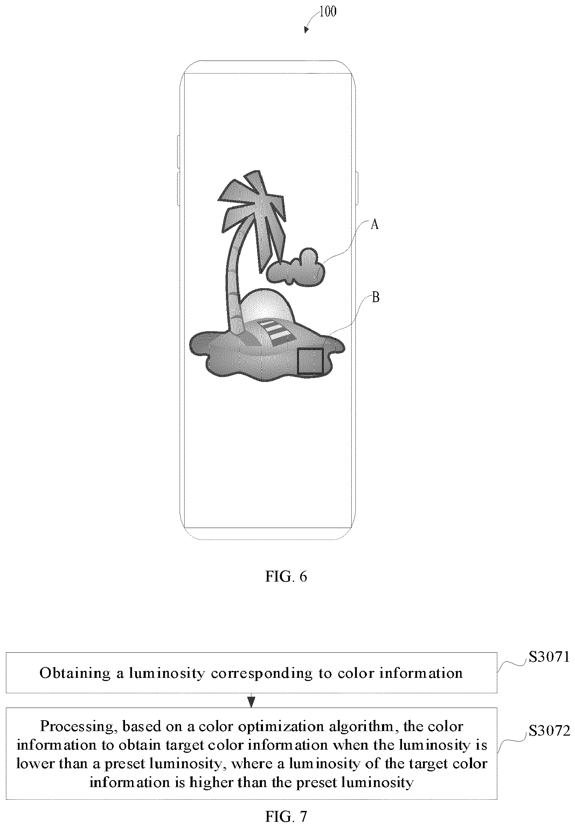

FIG. 6 is a schematic diagram illustrating an interface of an electronic device according to other implementations. As illustrated in FIG. 6, the electronic device can also generate and display a selection control in the image information at the beginning of displaying the image information or during displaying the image information, where B in FIG. 6 represents the selection control. The selection control may be in a shape of square, rectangle, circle, triangle, etc. The selection control may have a relatively large size or a relatively small size. The shape and size of the selection control can be changed according to actual needs during use, which is not limited in the disclosure.

At block S3032, in response to a drag operation against the selection control, a region in the image information corresponding to the selection control after dragging is assigned as the target image region.

In this implementation, the electronic device can detect a drag operation against the selection control during displaying the image information and displaying the selection control in the image information. When a drag operation against the selection control is detected, in response to the drag operation, a region in the image information corresponding to the selection control after dragging can be determined as the target image region.

In some implementations, when the electronic device generates and displays the selection control in the image information, the selection control can be displayed in a preset position and defines a preset region (such as by a frame) in the image information. When a default display position of the selection control and the region defined meet user's requirements, the selection control is not allowed to be dragged by the user, and the region defined by the selection control is used as the target image region. On the other hand, when the default display position of the selection control and the region defined do not meet the user's requirements, the selection control can be dragged by the user, and a region in the image information corresponding to the selection control after dragging is used as the target image region.

In some implementations, when generating and displaying the selection control in the image information, the electronic device can recognize the image information, and control a display position of the selection control and determine an object selected by the selection control according to a recognition result. For example, the image information is recognized to obtain a foreground image of the image information, and the selection control is controlled to select the foreground image. When the object selected by the selection control meets the user's requirements, the selection control is not allowed to be dragged by the user, and a region corresponding to the object selected by the selection control is determined as the target image region. When the object selected by the selection control does not meet the user's requirements, the selection control is allowed to be dragged by the user, and the region in the image information corresponding to the selection control after dragging is determined as the target image region.

At block S304, texture information and color information of the target image region are extracted.

In some implementations, the electronic device can obtain the number of types of the color information in the image information. When the number of types of the color information is greater than a designated number of types, a designated number of types of the color information is extracted from the image information in descending order of the color information.

Specifically, the electronic device can recognize types of the color information in the image information, and obtain the number of the types of the color information. For example, when recognizing that the color information in the image information includes red, yellow, green, and blue, the number of the types of the color information is determined to be four. When recognizing that the color information in the image information includes red, yellow, and green, the number of the types of the color information is determined to be three, which is not limited herein. A designated number of types may be set in advance and stored in the electronic device, where the designated number of types is used as a basis for determining the number of types of the color information to be extracted from the image information. Therefore, in this implementation, after obtaining the number of types of the color information in the image information, the number of types of color information is compared with a designated number of types (i.e., a threshold), to determine whether the number of types of color information is greater than the designated number of types. When the number of types of the color information is greater than the designated number of types, the number of color types (i.e., the number of the types of the color information) is considered to be relatively large, and a designated number of types of the color information is extracted from the image information in descending order of the color information. When the number of types of the color information is less than or equal to the designated number of types, the number of color types is considered to be appropriate, and the color information can be extracted directly. In some implementations, the designated number of types is three.

In some implementations, when the number of types of the color information is greater than the designated number of types, the number of pixels of each color information in the image information is obtained, and a designated number of types of the color information is extracted from the image information in descending order of the pixels of each color information. The designated number of types is three for example, and three types of the color information is extracted from the image information in descending order of the pixels of each color information.

In some implementations, when the number of types of the color information is less than or equal to the designated number of types, the size of a region occupied by each color in the image information is obtained, and a designated number of types of the color information is extracted from the image information in descending order of the size of the region occupied by each color. The designated number of types is three for example, and three types of the color information is extracted from the image information in descending order of the size of the region occupied by each color.

At block S305, the texture information is inputted into a trained classification model, and a type of the texture information outputted by the trained classification model is obtained.

At block S306, a picture corresponding to the type of the texture information is obtained based on a preset mapping relationship as a picture to-be-processed.

For details of operations at blocks S305 to S306, reference may be made to the related descriptions in operations at blocks S202 to step S203, which will not be repeated herein.

At block S307, the color information is processed based on a color optimization algorithm to obtain target color information.

In this implementation, after obtaining the color information of the image information, the electronic device can process the color information based on a color optimization algorithm to obtain target color information. In this way, color information that looks better than the color information of the image information can be obtained, which improving a display effect.

In some implementations, after obtaining the color information of the image information, the electronic device can search for a color optimization manner corresponding to the color information of the image information from a preset color optimization table, and can process, based on the color optimization manner, the color information to obtain target color information.

Specifically, a preset color optimization table may be set in advance and stored in the electronic device. The preset color optimization table includes a correspondence between multiple pieces of color information and multiple color optimization manners. In the preset color optimization table, the color information may be a pure color or a combination of multiple colors. In the preset color optimization table, the multiple pieces of color information are be in one-to-one correspondence with the multiple color optimization manners, or some pieces of color information correspond to one color optimization manner, or one piece of color information corresponds to some color optimization manners, which is not limited herein.

For example, as illustrated in Table 3, the multiple pieces of color information include first color information, second color information, third color information, and fourth color information, and the multiple color optimization manners include a first color optimization manner, a second color optimization manner, a third color optimization manner, and a fourth color optimization manner. The first color information corresponds to the first color optimization manner, the second color information corresponds to the second color optimization manner, the third color information corresponds to the third color optimization manner, and the fourth color information corresponds to the fourth color optimization manner.

**Table 3**

| color information | color optimization manner |
|---|---|
| first color information | first color optimization manner |
| second color information | second color optimization manner |
| third color information | third color optimization manner |
| fourth color information | fourth color optimization manner |

In some implementations, after the color information of the image information is obtained, the color information of the image information is compared with the multiple pieces of color information in the preset color optimization table, to determine a piece of color information that matches the obtained color information (i.e., the color information of the image information) from the multiple pieces of color information in the preset color optimization table. Then a color optimization manner corresponding to the piece of color information that matches the color information of the image information in the preset color optimization table is obtained. The obtained color optimization manner corresponding to the piece of color information is determined as the color optimization manner corresponding to the color information of the image information. For example, after comparing the color information of the image information with the multiple pieces of color information in the preset color optimization table, if the first color information among the multiple pieces of color information is determined to be matched with the color information of the image information, the first color optimization manner corresponding to the first color information is obtained, and the first color optimization manner is determined as the color optimization manner corresponding to the color information of the image information.

In some implementations, the preset color optimization table may also include a correspondence between multiple pieces of color information and multiple pieces of optimized color information. In the preset color optimization table, the multiple pieces of color information are in one-to-one correspondence with the multiple pieces of optimized color information, or some pieces of color information correspond to one piece of optimized color information, or one piece of color information corresponds to some pieces of optimized color information, which are not limited herein.

For example, as illustrated in Table 4, the multiple pieces of color information include first color information, second color information, third color information, and fourth color information, and the multiple pieces of optimized color information include fifth color information, sixth color information, seventh color information, and eighth color information. The first color information corresponds to the fifth color information, the second color information corresponds to the sixth color information, the third color information corresponds to the seventh color information, and the fourth color information corresponds to the eighth color information.

**Table 4**

| color information | optimized color information |
|---|---|
| first color information | fifth color information |
| second color information | sixth color information |
| third color information | seventh color information |
| fourth color information | eighth color information |

In some implementations, after the color information of the image information is obtained, the color information of the image information is compared with the multiple pieces of color information in the preset color optimization table, to determine a piece of color information that matches the color information of the image information. Then a piece of optimized color information corresponding to the piece of color information that matches the color information of the image information in the preset color optimization table is obtained. The obtained optimized color information corresponding to the piece of color information is determined as the optimized color information corresponding to the color information of the image information. For example, after comparing the color information of the image information with the multiple pieces of color information in the preset color optimization table, if the first color information among the multiple pieces of color information is determined to be matched with the color information of the image information, the fifth color information corresponding to the first color information is obtained, and the fifth color information is determined as the optimized color information corresponding to the color information of the image information.

FIG. 7 is a schematic flowchart illustrating operations at block S307 of the method for picture generation illustrated in FIG. 3 according to some implementations. Detailed descriptions will be given below with reference to operations illustrated in FIG. 7. The method includes the following.

At block S3071, a luminosity corresponding to the color information is obtained.

In this implementation, after obtaining the color information of the image information, the electronic device can obtain the luminosity corresponding to the color information. In some implementations, a mean and variance of the image information on a grayscale image can be calculated to obtain the luminosity of the color information of the image information, or a conversion of the image information from RGB to HSL or HSV can be controlled to obtain the luminosity of the color information of the image information, or the image information is converted into a grayscale picture, and a pixel average value is calculated with cvAvg to be assigned as the luminosity of the color information of the image information, which is not limited in the disclosure. In this implementation, other manners for obtaining the luminosity of the color information of the image information may also be adopted, which will not be repeated herein.

At block S3072, when the luminosity is lower than a preset luminosity, the color information is processed based on the color optimization algorithm to obtain the target color information, where a luminosity of the target color information is higher than the preset luminosity.

In some implementations, a luminosity may be set in advance and stored in the electronic device, where the preset luminosity is used as a basis for determining a luminosity corresponding to the color information. Therefore, in this implementation, after the luminosity corresponding to the color information is obtained, the luminosity corresponding to the color information is compared with the preset luminosity, to determine whether the luminosity corresponding to the color information is lower than the preset luminosity. When the luminosity corresponding to the color information is lower than the preset luminosity, it means that the color information is relatively dark and unpleasant. In this case, the color information can be processed based on a color optimization algorithm to obtain target color information with a luminosity higher than the preset luminosity, so as to obtain a more desirable color. When the luminosity corresponding to the color information is higher than or equal to the preset luminosity, it means that the color information is relatively gorgeous and pleasant. In this case, the color information is not processed.

At block S308, the picture to-be-processed is processed based on the target color information to generate a target picture.

For details of operations at block S208, reference may be made to the related descriptions in operations at block S103, which will not be repeated herein.

At block S309, multiple target pictures are displayed.

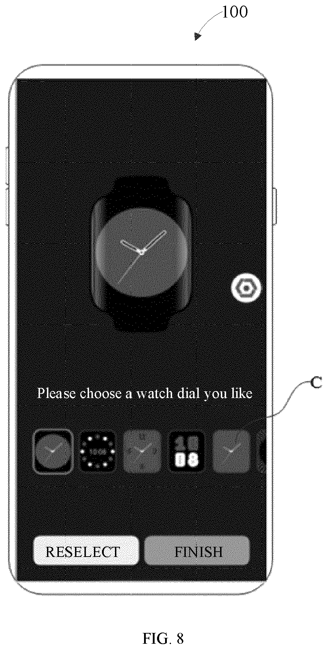

FIG. 8 is a schematic diagram illustrating an interface of an electronic device according to other implementations. As illustrated in FIG. 8, when multiple generated target pictures are included, the multiple target pictures can be displayed for the user to select, where C in FIG. 7 represents a target picture. There are five target pictures C illustrated in FIG. 8, and a display order and a display layout manner of the multiple target pictures are not limited in the disclosure.

At block S310, a selection operation against the multiple target pictures is obtained, and a target picture is selected based on the selection operation from the multiple target pictures.

In some implementations, during displaying the multiple target pictures, the electronic device can detect a selection operation against the multiple target pictures. Upon detecting a selection operation against one of the multiple target pictures, the selection operation against the target picture is obtained, and a target picture is selected and determined based on the selection operation from the multiple target pictures. In this implementation, the selection operation against the multiple target pictures can be triggered by a user's finger, triggered by a stylus, or triggered by an external device, and so on, which is not limited herein. In the case that the selection operation against the multiple target pictures is triggered by a user's finger, the selection operation may include a single-finger click operation, a multi-finger click operation, a single-finger pressing operation, a multi-finger pressing operation, and a single-finger sliding operation, a multi-finger sliding operation, and the like, which is not limited herein.

At block S311, a target display picture corresponding to the target picture is obtained based on the target picture, and the target display picture is displayed on a device to replace a displayed picture.

For details of operations at block S311, reference may be made to the related descriptions in operations at block S205, which will not be repeated herein.

According to the method for picture generation of the implementation of the disclosure, image information is obtained and displayed. A selection operation against the image information is received. A target image region in the image information is determined based on the selection operation. Texture information and color information of the target image region are extracted. The texture information is inputted into a trained classification model, and a type of the texture information outputted by the trained classification model is obtained. A picture corresponding to the type of the texture information is obtained based on a preset mapping relationship as a picture to-be-processed. The color information is processed based on a color optimization algorithm to obtain target color information. The picture to-be-processed is processed based on the target color information to generate a target picture. Multiple target pictures are displayed. A selection operation against the multiple target pictures is obtained, and a target picture is selected based on the selection operation from the multiple target pictures. A target display picture corresponding to the target picture is obtained based on the target picture, and the target display picture is displayed on a device to replace a displayed picture. Compared with the method illustrated in FIG. 1, in this implementation, the target image region can be determined based on the selection operation against the image information, and the target display picture can be generated by selecting a target picture based on a selection operation against the multiple target pictures, which can increase interaction with the user, thereby enhancing user experience.

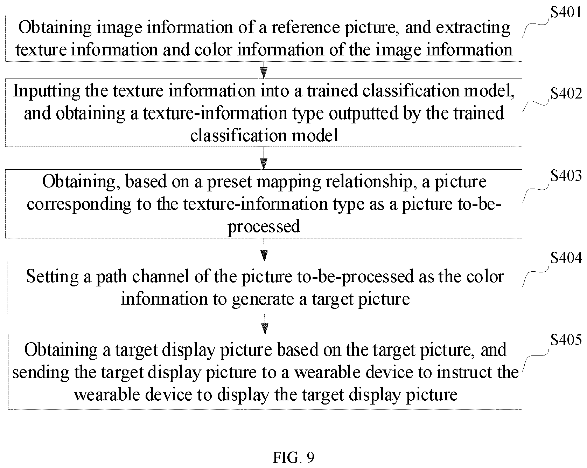

FIG. 9 is a schematic flowchart illustrating a method for picture generation according to other implementations. This method is applicable to the above-mentioned electronic device. Detailed descriptions will be given below with reference to operations illustrated in FIG. 9. The method for picture generation includes the following.

At block S401, image information of a reference picture is obtained, and texture information and color information of the image information are extracted.

At block S402, the texture information is inputted into a trained classification model, and a type of the texture information outputted by the trained classification model is obtained.

At block S403, a picture corresponding to the type of the texture information is obtained based on a preset mapping relationship as a picture to-be-processed.

For details of operations at blocks S401 to S403, reference may be made to the related descriptions in operations at blocks S201 to S203, which will not be repeated herein.

At block S404, a path channel of the picture to-be-processed is set as the color information to generate a target picture.

In some implementations, the picture to-be-processed is an SVG picture. After obtaining the picture to-be-processed, the electronic device sets a path channel of the picture to-be-processed as the color information extracted from the image information, to generate a target picture similar to the texture information and the color information of the obtained image information.

In this implementation, the SVG picture may include a primary channel, a secondary channel, and a third channel. In some implementations, the color information may include a primary color (e.g., a pure color), or may include a primary color, a secondary color, and a third color. When the color information is a pure color, the primary channel of the SVG picture is filled with a primary color, and the secondary channel and the third channel of the SVG picture are filled with a second color converted from the primary color. As an implementation, the second color is obtained by searching for the above-mentioned preset color optimization table, which will not be repeated herein. When the color information is not a pure color, the primary channel of the SVG picture is filled with a primary color. If the SVG picture includes a secondary channel and the color information includes a second color, the secondary channel of the SVG picture is filled with the second color. If the SVG picture does not include a secondary channel and/or the color information does not include a second color, skip a filling operation with the second color. Similarly, if the SVG picture includes a third channel and the color information includes a third color, the third channel of the SVG picture is filled with the third color. If the SVG picture does not include a third channel and/or the color information does not include a third color, skip a filling operation with the third color.

At block S405, a target display picture is obtained based on the target picture, and the target display picture is sent to a wearable device to instruct the wearable device to display the target display picture.

In some implementations, the device for replacing a displayed picture is a wearable device. The electronic device can send a target display picture to the wearable device through short-range communication technology, to instruct the wearable device to display the target display picture. The electronic device can also send a color parameter RGB of a target display picture to the wearable device through short-range communication technology, to instruct the wearable device to process a picture to-be-processed based on the received color parameter RGB to obtain a target picture and generate and display the target display picture based on the target picture.

In some implementations, the wearable device includes a smart watch. After obtaining the target picture, the electronic device can obtain a target display picture based on the target picture, and send the target display picture to the smart watch, to instruct the smart watch to replace a dial interface with the target display picture. The electronic device can also send a color parameter RGB of a target display picture to the smart watch, to instruct the smart watch to process a picture to-be-processed based on the received color parameter RGB to obtain a target picture and generate and display the target display picture based on the target picture. In some implementations, when the smart watch displays the target display picture, information such as hands, time, power, etc. can also be synthesized, which is not limited herein.

According to the method for picture generation of the implementations of the disclosure, image information is obtained, and texture information and color information of the image information are extracted. The texture information is inputted into a trained classification model, and a type of the texture information outputted by the trained classification model is obtained. A picture corresponding to the type of the texture information is obtained based on a preset mapping relationship as a picture to-be-processed. A path channel of the picture to-be-processed is set as the color information to generate a target picture. A target display picture is obtained based on the target picture, and the target display picture is sent to a wearable device to instruct the wearable device to display the target display picture. Compared with the method illustrated in FIG. 1, in this implementation, the path channel of the picture to-be-processed is set as the obtained color information for color setting, and the target display picture is sent to the wearable device for display, which can enhance display diversity of the wearable device.

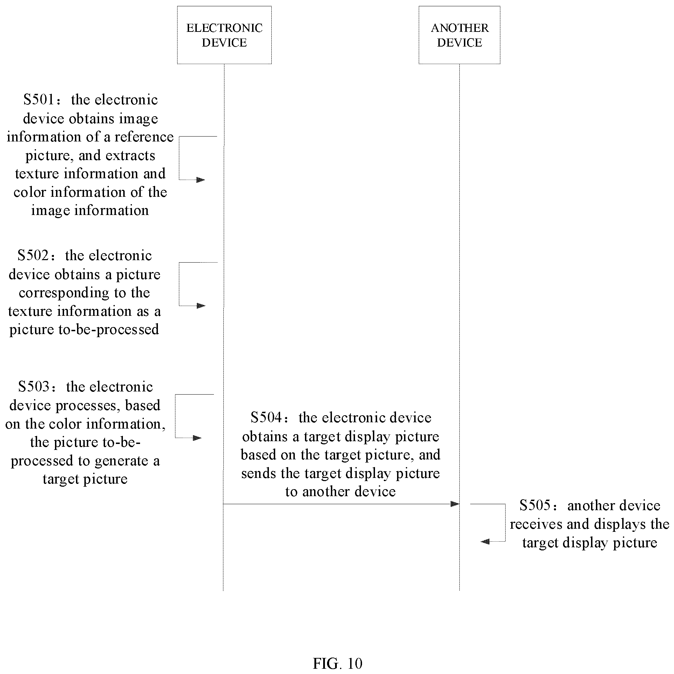

FIG. 10 is a sequence diagram illustrating a method for picture generation according to other implementations. Detailed descriptions will be given below with reference to operations illustrated in FIG. 10. The method includes the following.

At S501, an electronic device obtains image information of a reference picture, and extracts texture information and color information of the image information.

At S502, the electronic device obtains a picture corresponding to the texture information as a picture to-be-processed.

At S503, the electronic device processes, based on the color information, the picture to-be-processed to generate a target picture.

At S504, the electronic device obtains a target display picture based on the target picture, and sends the target display picture to a device.

At S505, the device receives and displays the target display picture.

According to the method for picture generation of the implementations of the disclosure, the electronic device obtains image information, and extracts texture information and color information of the image information. The electronic device obtains a picture corresponding to the texture information as a picture to-be-processed. The electronic device processes, based on the color information, the picture to-be-processed to generate a target picture. The electronic device obtains a target display picture based on the target picture, and sends the target display picture to a device. The device receives and displays the target display picture. In this way, the target display picture can be obtained according to the texture information and the color information of the image information, so as to display on the device for replacing a displayed picture, which can improve diversity of the displayed picture.

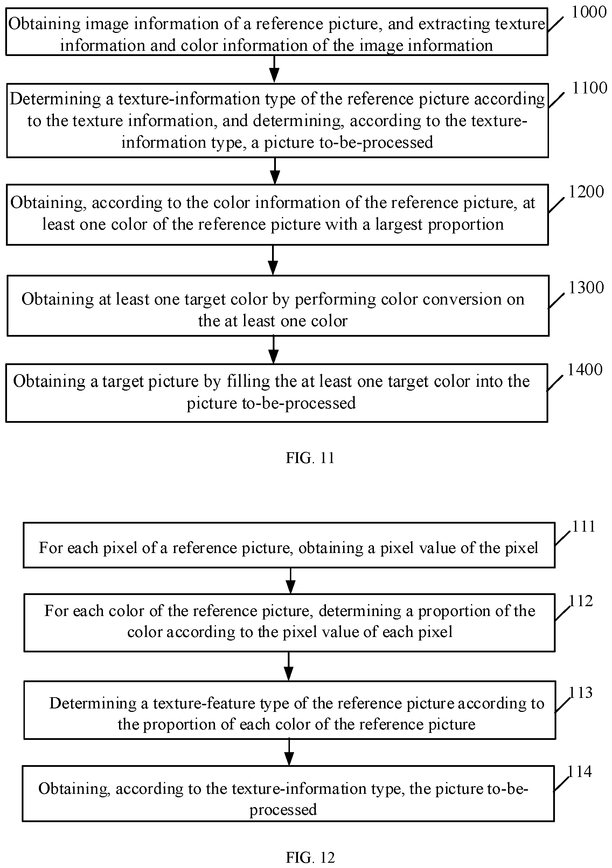

FIG. 11 is a schematic flowchart illustrating a method for picture generation according to other implementations. As illustrated in FIG. 11, the method for picture generation includes the following.

At block 1000, image information of a reference picture is obtained, and texture information and color information of the image information are extracted.

At block 1100, a texture-information type of the reference picture is determined according to the texture information, and a picture to-be-processed is determined according to the texture-information type.

At block 1200, at least one color of the reference picture with a largest proportion is obtained according to the color information of the reference picture.

The color information represents color distribution of the reference picture. A proportion of each color of the reference picture can be determined according to the extracted color information. One or more colors of the reference picture with a largest proportion can be determined according to the proportion of each color. The number of colors to-be-obtained can be set or adjusted by the user, automatically set by the system, or automatically set according to the number of colors of the reference picture.

As an example, the reference picture is a pure color picture, that is, the reference picture includes only one color (e.g., blue). In this case, only one color of the reference picture with the largest proportion (i.e., blue) can be obtained. As another example, the reference picture includes five colors: blue, green, red, gray, and white, where blue of the reference picture accounts for 50%, green of the reference picture accounts for 15%, red of the reference picture accounts for 20%, and gray of the reference picture accounts for 5%, and white of the reference picture accounts for 10%. If three colors need to be obtained, obtained three colors with a largest proportion are blue, red, and green.

The obtained at least one color with the largest proportion is not necessarily represented by a color name. In one implementation, the obtained at least one color with the largest proportion is represented by other manners, such as a color code, a color parameter, and so on. For example, R represents red, G represents green, and B represents blue.

At block 1300, at least one target color is obtained by performing color conversion on the at least one color.

Since the at least one color obtained from the reference picture is not necessarily a color that the user likes, or is not necessarily suitable for a color of the dial interface, color conversion can be performed on the at least one color to obtain the at least one target color. The target color may be a preset color suitable for a color of the dial interface, or the target color is a color that the user likes.

A color conversion relationship or a color optimization algorithm may be set in advance. Color conversion can be performed on the at least one color through the color conversion relationship or the color optimization algorithm.

Three colors obtained are light red, gray, and navy blue for example. Color conversion are performed on light red, gray, and navy blue respectively to obtain three target colors, that is, garnet red corresponding to light red, sea blue corresponding to gray, and light green corresponding to navy blue.

At block 1400, a target picture is obtained by filling the at least one target color into the picture to-be-processed.

After the at least one target color is obtained, the at least one target color can be filled into the picture to-be-processed to obtain the target picture. Since the target picture is filled with the at least one target color, the target picture has rich colors. In addition, the target picture is filled with a color(s) that the user likes, that is, the target picture contains user's personalized elements, and so the target picture can be used to generate a dial interface which is personalized for the user.

After the target picture is obtained, the smart-watch dial interface can be generated according to the target picture. As an example, the target picture is set as the background of a dial of the smart watch, and then information such as time and weather are displayed on the background of the dial. As such, a dial interface with user personalization can be generated.

When a system including a smart watch and a mobile terminal executes the foregoing method, the mobile terminal performs the method to obtain the target picture, and sends the target picture to the smart watch. Then the smart watch generates a dial interface according to the received target picture. When the foregoing method is executed by the smart watch alone, the smart watch performs the method by itself to obtain the target picture, and generate the dial interface according to the target picture.

According to the method for picture generation of the implementations of the disclosure, the picture to-be-processed and the at least one color are obtained according to the reference picture. The at least one target color is obtained by performing conversion on the at least one color. The target picture is obtained by filling the at least one target color into the picture to-be-processed. Since the reference picture can be selected or set by a user, the target picture obtained according to the reference picture contains user's personalized elements, so that the generated dial interface is personalized for the user. As such, the form of the dial interface can be enriched, thereby enhancing diversity of the form of the dial interface.

FIG. 12 is a schematic flowchart illustrating a method for picture generation according to other implementations. In some implementations, as illustrated in FIG. 12, the operations of determining the texture-information type of the reference picture according to the texture information and determining, according to the texture-information type, the picture to-be-processed are as follows.

At block 111, for each pixel of the reference picture, a pixel value is obtained.

At block 112, for each color of the reference picture, a proportion of the color is determined according to the pixel value of each pixel.

At block 113, a texture-information type of the reference picture is determined according to the proportion of each color of the reference picture.

At block 114, the picture to-be-processed is obtained according to the texture-information type.

After the reference picture is determined, each pixel of the reference picture may be traversed to obtain a pixel value of each pixel of the reference picture. In one implementation, before traversing each pixel of the reference picture, the reference picture is subjected to grayscale processing to convert the reference picture into a grayscale image, and then the converted grayscale image is normalized. Each pixel of the reference picture after the normalization process is traversed.

Then statistics on the pixel value of each pixel are performed according to the obtained pixel value of each pixel, to determine a proportion of each color of the reference picture. That is, a ratio of a region of each color of the reference picture to the entire region of the reference picture is determined.

Subsequently, the texture-information type of the reference picture is determined according to the proportion of each color. For example, when a proportion of a color occupying a largest proportion is greater than 70%, the texture-information type of the reference picture is determined to be pure color. When the proportion of the color occupying the largest proportion is greater than 50% and less than 60% and a proportion of a color occupying a second largest proportion is greater than 30% and less than 40%, the texture-information type of the reference picture is determined to be stripe.

After the texture-information type of the reference picture is determined, the picture to-be-processed can be obtained according to the texture-information type.

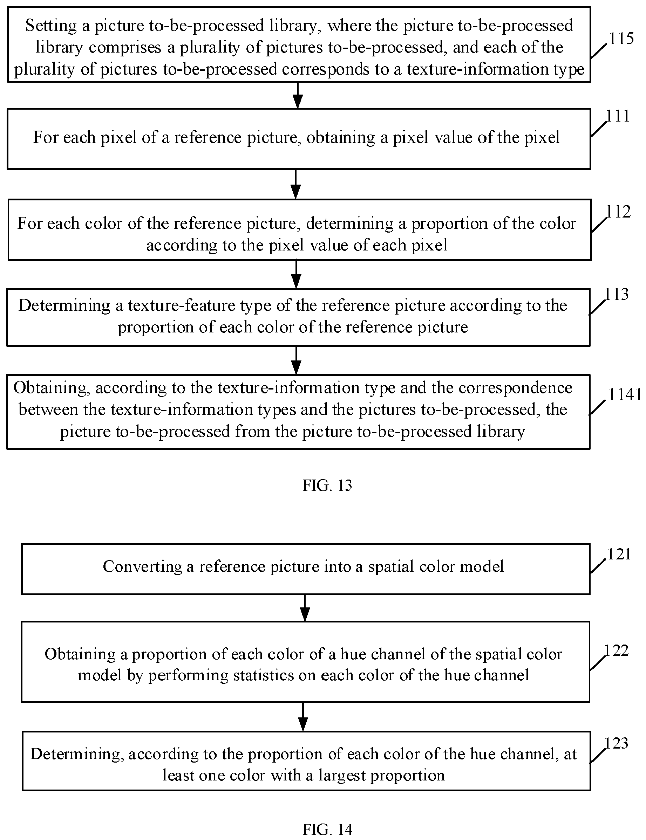

FIG. 13 is a schematic flowchart illustrating a method for picture generation according to other implementations. In some implementations, as illustrated in FIG. 13, before obtaining the pixel value for each pixel of the reference picture, the method further includes the following.

At block 115, a picture to-be-processed library is provided, where the picture to-be-processed library includes multiple pictures to-be-processed, and each of the multiple pictures to-be-processed corresponds to a texture-information type.

The picture to-be-processed is obtained according to the texture-information type as follows. At block 1141, according to the texture-information type and the correspondence between the texture-information types and the pictures to-be-processed, the picture to-be-processed is obtained from the picture to-be-processed library.

The picture to-be-processed library can be set in advance. As an example, the picture to-be-processed library is as illustrated in Table 5 below.

**Table 5**

| texture-information type | picture to-be-processed |
|---|---|
| pure color | picture to-be-processed 1 |
| grid | picture to-be-processed 2 |
| stripe | picture to-be-processed 3 |
| complex | picture to-be-processed 4 |

The picture to-be-processed library includes multiple pictures to-be-processed, and each of the pictures to-be-processed corresponds to a texture-information type.

After the texture-information type of the reference picture is determined, according to the texture-information type and the correspondence between the texture-information types and the pictures to-be-processed, a picture to-be-processed can be obtained from the picture to-be-processed library. The determined texture-information type of the reference picture is stripe for example, a picture to-be-processed corresponding to the texture-information type of the reference picture obtained is picture to-be-processed 3.

FIG. 14 is a schematic flowchart illustrating a method for picture generation according to other implementations. In some implementations, as illustrated in FIG. 14, the at least one color of the reference picture with the largest proportion is obtained according to the color information of the reference picture as follows.

At block 121, the reference picture is converted into a spatial color model.

At block 122, a proportion of each color of a hue channel of the spatial color model is obtained by performing statistics on each color of the hue channel.

At block 123, the at least one color with the largest proportion is determined according to the proportion of each color of the hue channel.

After the reference picture is determined, format conversion can be performed on the reference picture to convert the reference picture into a spatial color model (i.e., a hue saturation value (HSV) model). The HSV model includes three channels: hue (H), saturation (S), and value (V).

Subsequently, each color of the hue channel of the HSV model is counted to obtain the proportion of each color of the hue channel. Then the at least one color with the largest proportion is determined according to the proportion of each color of the hue channel.

For example, in a counting result, blue accounts for 50%, green accounts for 15%, red accounts for 20%, gray accounts for 5%, and white accounts for 10%. If three colors need to be determined, three colors with a largest proportion among the colors are determined to be blue, red, and green.

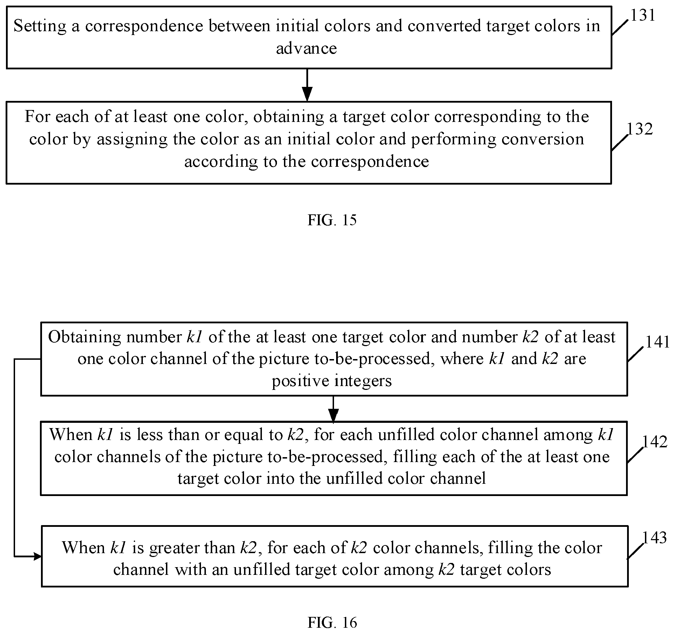

FIG. 15 is a schematic flowchart illustrating a method for picture generation according to other implementations. In some implementations, as illustrated in FIG. 15, the at least one target color is obtained by performing color conversion on the at least one color as follows.

At block 131, a correspondence between initial colors and converted target colors is set in advance.

At block 132, for each of the at least one color, a target color corresponding to the color is obtained by assigning the color as an initial color and performing conversion according to the correspondence.

The correspondence between the initial colors and the converted target colors can be set in advance. As an example, the correspondence is as illustrated in Table 6 below.

**Table 6**

| initial color | target color |
|---|---|
| color a 1 | color b1 |
| color a2, a3 | color b2 |
| color a4 | color b3 |
| color a5, a6, a7 | color b4 |

According to the correspondence, each target color may correspond to one or several initial colors. When performing color conversion, each of the obtained at least one color is used as an initial color and converted according to the correspondence, to obtain a target color corresponding to each color.

Obtained multiple colors include color a1, color a2, and color a3 for example, conversion on each of the obtained multiple colors is performed, to obtain a target color b1 corresponding to the color a1, a target color b2 corresponding to the color a2, and the target color b2 corresponding to the color a3.

FIG. 16 is a schematic flowchart illustrating a method for picture generation according to other implementations. In some implementations, as illustrated in FIG. 16, the target picture is obtained by filling the at least one target color into the picture to-be-processed as follows.

At block 141, number *k1* of the at least one target color and number *k2* of at least one color channel of the picture to-be-processed are obtained, where *k1* and *k2* are positive integers.

At block 142, when *k1* is less than or equal to *k2,* for each unfilled color channel among *k1* color channels of the picture to-be-processed, each of the at least one target color is filled into the unfilled color channel.

At block 143, when *k1* is greater than *k2,* for each of *k2* color channels, the color channel is filled with an unfilled target color among *k2* target colors.

The number *k1* of the at least one target color and the number *k2* of the at least one color channel of the picture to-be-processed may be obtained first, where both *k1* and *k2* are positive integers. For example, both *k1* and *k2* are 1, 2, 3, and so on.

Subsequently, if *k1* is less than or equal to *k2,* when performing color filling, for each unfilled color channel among *k1* color channels of the picture to-be-processed, filling each of the at least one target color into the unfilled color channel. If *k1* is greater than *k2,* for each of *k2* color channels, filling the color channel with an unfilled target color among *k2* target colors.

As an example, *k1*=2 and *k2*=3. For each unfilled color channel among 2 color channels, each of the 2 target colors is filled into the unfilled color channel. The at least one target color for example includes b1, b2 and the at least one color channel for example includes c1, c2, c3, target color b2 can be filled into color channel c1, target color b2 can be filled into color channel c2, and color channel c3 is not filled.

As another example, *k1*=3 and *k2*=2*.* For each of 2 color channels, the color channel is filled with an unfilled target color among 2 target colors. The at least one target color for example includes b1, b2, b3 and the at least one color channel for example includes c1, c2, target color b1 can be filled in color channel c1, target color b2 can be filled in color channel c2, and target color c3 is not used.

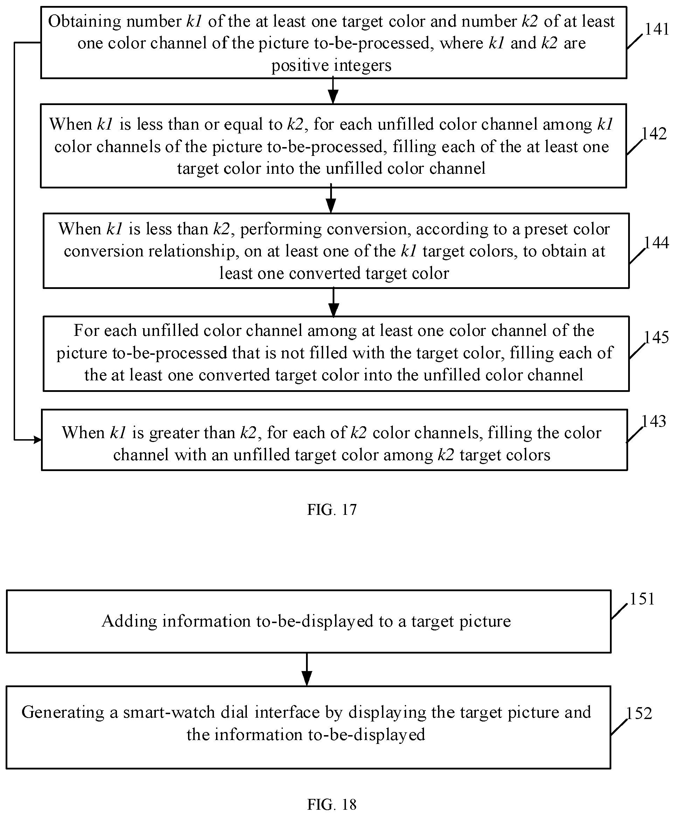

FIG. 17 is a schematic flowchart illustrating a method for picture generation according to other implementations. In some implementations, as illustrated in FIG. 17, after filling, for each unfilled color channel among *k1* color channels of the picture to-be-processed, each of the at least one target color into the unfilled color channel, the method further includes the following.

At block 144, when *k1* is less than *k2,* conversion on at least one of the *k1* target colors is performed according to a preset color conversion relationship, to obtain at least one converted target color.

At block 145, for each unfilled color channel among at least one color channel of the picture to-be-processed that is not filled with the target color, each of the at least one converted target color is filled into the unfilled color channel.

When *k1* is less than *k2* (i.e., when the number of target colors is less than the number of color channels), at least one of the *k1* target colors can be converted according to the preset color conversion relationship to obtain at least one converted target color. The preset color conversion relationship may be set by the user or automatically set by the system.

Subsequently, for each unfilled color channel among at least one color channel of the picture to-be-processed that is not filled with the target color, each of the at least one converted target color is filled into the unfilled color channel.

The at least one target color only includes b1 for example and the at least one color channel includes c1 and c2 for example, after the target color b1 is filled into the color channel c1, the target color b1 can be converted (e.g., converted target color b11 is obtained). Then the converted target color b11 is filled into the color channel c2.

The at least one target color includes b1 and b2 for example and the at least one color channel includes c1, c2, c3, and c4 for example, the target color b1 is filled into the color channel c1 and the target color b2 is filled into the color channel c2, and conversion on the target colors b1, b2 is performed (e.g., converted target colors b11 and b21 are obtained). Then the converted target color b11 is filled into the color channel c3, and the converted target color b21 is filled into the color channel c4.

FIG. 18 is a schematic flowchart illustrating a method for picture generation according to other implementations. In some implementations, the method further includes the following. A smart-watch dial interface is generated according to the target picture. As illustrated in FIG. 18, the smart-watch dial interface is generated according to the target picture as follows.

At block 151, information to-be-displayed is added to the target picture.

At block 152, the smart-watch dial interface is generated by displaying the target picture and the information to-be-displayed.

When the smart-watch dial interface is generated, the information to-be-displayed can be added to the obtained target picture. The information to-be-displayed may include, for example, time, date, weather, user health information, and so on. The format of contents such as time, date, weather, user health information, etc. is not limited in the disclosure. As an example, the time may be expressed in a digital manner or expressed by a needle.

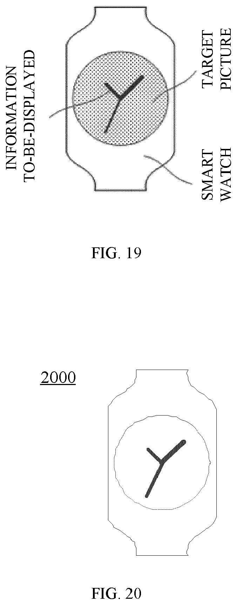

Subsequently, the target picture and the information to-be-displayed are displayed to generate the smart-watch dial interface. The generated smart-watch dial interface is as illustrated in FIG. 19, which is a schematic diagram illustrating a smart-watch dial interface according to some implementations.

In specific implementations, the order of execution of the various operations described is not limited in the disclosure, and certain operations may also be carried out in other order or carried out simultaneously without conflict.

As can be seen, in the method for picture generation of the implementations of the disclosure, the picture to-be-processed and the at least one color are obtained according to the reference picture. The at least one target color is obtained by performing conversion on the at least one color. The target picture is obtained by filling the at least one target color into the picture to-be-processed. The smart-watch dial interface is generated according to the target picture. Since the reference picture can be selected or set by a user, the target picture obtained according to the reference picture contains user's personalized elements, so that the generated dial interface is personalized for the user. As such, the form of the dial interface can be enriched, thereby enhancing diversity of the form of the dial interface.

In implementations of the disclosure, a smart watch is further provided. FIG. 20 illustrates a smart watch 2000 according to some implementations.

The smart watch 2000 is configured to execute the method for picture generation as described in any of the above implementations. The smart watch 2000 may be provided with a camera, a processor, and a memory. The camera can be configured to take photos, and use the taken photos or a partial region of the photo as the reference picture. The processor can be configured for data processing to execute the method described in any of the above implementations, to generate a smart-watch dial interface. The memory can be configured to store data, such as storing pictures and data obtained and generated during operations of the processor.

In practice, the user can take a photo of the clothes he/she is wearing as the reference picture, so that the generated smart-watch dial interface can be matched with user's wearing, thereby enhancing coordination between the smart watch and the user's wearing.

In implementations of the disclosure, a system for generating a smart-watch dial interface is further provided. FIG. 21 illustrates a system 3000 for generating a smart-watch dial interface according to some implementations.

The system 3000 is configured to execute the foregoing method for picture generation of any of the foregoing implementations. The system 3000 includes a smart watch 3100 and a mobile terminal 3200. The smart watch 3100 is in communication connection with the mobile terminal 3200. For example, the smart watch 3100 is in communication connection with the mobile terminal 3200 through Bluetooth or the like. The mobile terminal 3200 may include, for example, a terminal device such as a smart phone, a tablet computer, and a notebook computer.

The mobile terminal 3200 is configured to: obtain a picture to-be-processed according to texture information of a reference picture; obtain, according to color information of the reference picture, at least one color of the reference picture with a largest proportion; obtain at least one target color by performing color conversion on the at least one color; and obtain a target picture by filling the at least one target color into the picture to-be-processed, and send the target picture to the smart watch 3100. The smart watch 3100 is configured to generate the smart-watch dial interface according to the target picture.

The mobile terminal 3200 may be provided with a camera. The camera can be used to take photos, and use the taken photos or a partial region of the photo as the reference picture. After obtaining the target picture, the mobile terminal 3200 sends the target picture to the smart watch 3100 by means of Bluetooth or the like.

For details of specific implementation manners executed by the mobile terminal 3200, reference may be made to the related descriptions in the foregoing implementations, which will not be described in further detail herein. Also, for details of specific implementation manners executed by the smart watch 3100, reference may be made to the related descriptions in the foregoing implementations, which will not be repeated herein.

In implementations of the disclosure, a device for generating a smart-watch dial interface is further provided. The device may be integrated in the above-mentioned smart watch 2000, or may be integrated in the above-mentioned system 3000 for generating a smart-watch dial interface.

FIG. 22 is a block diagram illustrating a device 200 for picture generation according to some implementations. The device 200 is applicable to the above-mentioned electronic device. The following will be described with reference to the block diagram illustrated in FIG. 22. As illustrated in FIG. 22, the device 200 includes an image-information obtaining module 210, a to-be-processed picture obtaining module 220, and a target-picture generating module 230.

The image-information obtaining module 210 is configured to obtain image information of a reference picture, and extract texture information and color information of the image information.

In some implementations, the image-information obtaining module 210 configured to extract the texture information and the color information of the image information is configured to: display the image information; receive a selection operation against the image information; determine, based on the selection operation, a target image region in the image information; and extract texture information and color information of the target image region.

In some implementations, the image-information obtaining module 210 configured to receive the selection operation against the image information and determine, based on the selection operation, the target image region in the image information is configured to: generate and display a selection control in the image information; and assign a region in the image information corresponding to the selection control after dragging as the target image region, in response to a drag operation against the selection control.

In other implementations, the image-information obtaining module 210 configured to extract the color information of the image information is configured to: obtain the number of types of the color information in the image information; and extract a designated number of types of the color information from the image information in descending order of color information, when the number of the types of the color information is greater than the designated number of types.

The to-be-processed picture obtaining module 220 is configured to obtain a picture corresponding to the texture information as a picture to-be-processed.

In some implementations, the to-be-processed picture obtaining module 220 configured to obtain the picture corresponding to the texture information as the picture to-be-processed is configured to: input the texture information into a trained classification model, and obtain a type of the texture information outputted by the trained classification model; and obtain, based on a preset mapping relationship, a picture corresponding to the type of the texture information as the picture to-be-processed.

In other implementations, the to-be-processed picture obtaining module 220 configured to obtain the picture corresponding to the texture information as the picture to-be-processed is configured to determine a texture-information type of the reference picture according to the texture information, and determine, according to the texture-information type, the picture to-be-processed.

The target-picture generating module 230 is configured to process, based on the color information, the picture to-be-processed to generate a target picture.

In some implementations, the target-picture generating module 230 configured to process, based on the color information, the picture to-be-processed to generate the target picture is configured to: process, based on a color optimization algorithm, the color information to obtain target color information; and process, based on the target color information, the picture to-be-processed to generate the target picture.

In some implementations, the target-picture generating module 230 configured to process, based on the color optimization algorithm, the color information to obtain target color information is configured to: search for a color optimization manner, from a preset color optimization table, corresponding to the color information; and process, based on the color optimization manner, the color information to obtain the target color information.

In some implementations, the target-picture generating module 230 configured to process, based on the color optimization algorithm, the color information to obtain target color information is configured to: obtain a luminosity corresponding to the color information; and process, based on the color optimization algorithm, the color information to obtain the target color information when the luminosity is lower than a preset luminosity, where a luminosity of the target color information is higher than the preset luminosity.

In other implementations, the target-picture generating module 230 configured to process, based on the color information, the picture to-be-processed to generate the target picture is configured to: obtain, according to the color information of the reference picture, at least one color of the reference picture with a largest proportion; obtain at least one target color by performing color conversion on the at least one color; and obtain the target picture by filling the at least one target color into the picture to-be-processed.

In some implementations, the target-picture generating module 230 configured to obtain, according to the color information of the reference picture, at least one color of the reference picture with the largest proportion is configured to: convert the reference picture into a spatial color model; obtain a proportion of each color of a hue channel of the spatial color model by performing statistics on each color of the hue channel; and determine, according to the proportion of each color of the hue channel, the at least one color with the largest proportion.

In some implementations, the target-picture generating module 230 configured to obtain at least one target color by performing color conversion on the at least one color is configured to: set a correspondence between initial colors and converted target colors in advance; and for each of the at least one color, obtain a target color corresponding to the color by assigning the color as an initial color and performing conversion according to the correspondence.

In some implementations, the target-picture generating module 230 configured to obtain the target picture by filling the at least one target color into the picture to-be-processed is configured to: obtain number *k1* of the at least one target color and number *k2* of at least one color channel of the picture to-be-processed, where *k1* and *k2* are positive integers; when *k1* is less than or equal to *k2,* for each unfilled color channel among *k1* color channels of the picture to-be-processed, fill each of the at least one target color into the unfilled color channel; or when *k1* is greater than *k2,* for each of *k2* color channels, fill the color channel with an unfilled target color among *k2* target colors.

In some implementations, the device 200 further includes a target-display-picture obtaining module. The target-display-picture obtaining module is configured to obtain a target display picture based on the target picture, and display the target display picture on a device to replace a displayed picture.

In some implementations, the target picture is embodied as multiple target pictures, and the target-display-picture obtaining module includes a target-picture displaying sub-module, a target-picture selecting sub-module, and a first picture replacing sub-module. The target-picture displaying sub-module is configured to display the multiple target pictures. The target-picture selecting sub-module is configured to obtain a selection operation against the multiple target pictures, and select, based on the selection operation, a target picture from the multiple target pictures. The first picture replacing sub-module is configured to obtain, based on the target picture, the target display picture corresponding to the target picture, and display the target display picture on the device to replace the displayed picture.

In some implementations, the target-display-picture obtaining module includes a target-display-picture obtaining sub-module. The target-display-picture obtaining sub-module is configured to obtain the target display picture based on the target picture, and send the target display picture to a wearable device to instruct the wearable device to display the target display picture.

In some implementations, the wearable device is a smart watch, and the target-display-picture obtaining sub-module includes a target-display-picture obtaining unit. The target-display-picture obtaining unit is configured to obtain the target display picture based on the target picture, and send the target display picture to the smart watch to instruct the smart watch to use and display the target display picture as a dial background.

Those skilled in the art can clearly understand that, for the convenience and conciseness of the description, specific working processes of the foregoing device and modules will not be detailed herein, and reference may be made to corresponding processes in the foregoing method implementations.

In the implementations of the disclosure, coupling or communication connection between illustrated or discussed components or modules may be electrical, mechanical, or other forms of coupling.

In addition, the functional units/modules in various implementations of the disclosure may be integrated into one processing unit/module, or each unit/module may be physically present, or two or more units/modules may be integrated into one unit/module. The above-mentioned integrated unit/module can be implemented in the form of hardware or a software function unit/module.

FIG. 23 is a block diagram illustrating an electronic device 100 configured to execute a method for picture generation according to some implementations. The electronic device 100 may be an electronic device capable of running programs, such as a smart phone, a tablet computer, an e-book, and so on. The electronic device 100 of the disclosure may include at least one of a processor 110, a memory 120, and one or more programs. The one or more programs are stored in the memory 120 and configured to be executed by one or more processors 110. The one or more programs are configured to execute the method described in the foregoing method implementations.

The processor 110 may include one or more processing cores. The processor 110 is coupled with various parts of the entire electronic device 100 through various interfaces and lines. By running or executing instructions, programs, code sets, or instruction sets stored in the memory 120, and by calling data stored in the memory 120, the processor 110 can execute various functions of the electronic device 100 and process data. As an implementation, the processor 110 may be at least one of digital signal processing (DSP), field-programmable gate array (FPGA), programmable logic array (PLA). The processor 110 may be integrated with one or a combination of a central processing unit (CPU), a graphics processing unit (GPU), and a modem, where the CPU mainly processes an operating system, a user interface, prsograms, and so on, the GPU is used to render and draw contents to-be-displayed, and the modem is used to process wireless communication. It can be understood that, the modem may not be integrated into the processor 110, but may be implemented by a communication chip alone.

The memory 120 may include a random access memory (RAM), and may also include a read-only memory (ROM). The memory 120 can be used to store instructions, programs, codes, code sets or instruction sets. The memory 120 may include a program storing region and a data storing region. The program storing region may store instructions for implementing the operating system, instructions for implementing at least one function (such as a touch function, a sound playback function, an image playback function, etc.), and instructions for implementing the foregoing method implementations. For the sake of simplicity, details for the operations are not repeated herein. The data storing region may store data created by the electronic device 100 during use (such as phone book, audio and video data, chat record data), and the like.

FIG. 24 is a structural block diagram illustrating a computer-readable storage medium according to some implementations. A non-transitory computer-readable storage medium 300 stores a computer program which, when invoked and executed by a processor, causes the processor to execute the method described in the foregoing method implementations. For the sake of simplicity, details for the operations are not repeated herein.

The computer-readable storage medium 300 may be an electronic memory such as a flash memory, an electrically erasable programmable read-only memory (EEPROM), an EPROM, a hard disk, or an ROM. As an implementation, the computer-readable storage medium 300 includes a non-transitory computer-readable storage medium. The computer-readable storage medium 300 has a storage space for program codes 310 which is configured to execute the operations of the foregoing method. These program codes can be read out from or written into one or more computer program products. The program code 310 may be compressed in a suitable form, for example.

In sum, according to the method and device for picture generation, the electronic device, and the storage medium of the implementations of the disclosure, image information is obtained, and texture information and color information of the image information are extracted. A picture corresponding to the texture information is obtained as a picture to-be-processed. The picture to-be-processed is processed based on the color information to generate a target picture. In the disclosure, the picture to-be-processed can be obtained based on the texture information of the image information, and the target picture can be generated by processing, based on the color information of the image information, the picture to-be-processed, so that the generated target image is more consistent with the image information in terms of characteristics, which satisfies user's personalized needs, thereby improving user experience.

## Claims

1. A method for picture generation, applicable to an electronic device and comprising:
obtaining (S101, S201, 1000) image information of a reference picture, and extracting texture information and color information of the image information;
obtaining (S102) a picture corresponding to the texture information as a picture to-be-processed; and
processing (S103, S204), based on the color information, the picture to-be-processed to generate a target picture.

2. The method of claim 1, wherein obtaining the picture corresponding to the texture information as the picture to-be-processed comprises:
inputting (S202) the texture information into a trained classification model, and obtaining a texture-information type outputted by the trained classification model; and
obtaining (S203), based on a preset mapping relationship, a picture corresponding to the texture-information type as the picture to-be-processed.

3. The method of claim 1, wherein obtaining the picture corresponding to the texture information as the picture to-be-processed comprises:
determining (1100) a texture-information type of the reference picture according to the texture information, and determining (1100), according to the texture-information type, the picture to-be-processed.

4. The method of claim 3, wherein determining the texture-information type of the reference picture according to the texture information and determining, according to the texture-information type, the picture to-be-processed comprise:
for each pixel of the reference picture, obtaining (111) a pixel value of the pixel;
for each color of the reference picture, determining (112) a proportion of the color according to the pixel value of each pixel;
determining (113) the texture-information type of the reference picture according to the proportion of each color of the reference picture; and
obtaining (114), according to the texture-information type, the picture to-be-processed.

5. The method of claim 4, further comprising:
before obtaining, for each pixel of the reference picture, the pixel value of the pixel,
setting (115) a picture to-be-processed library, wherein the picture to-be-processed library comprises a plurality of pictures to-be-processed, and each of the plurality of pictures to-be-processed corresponds to a texture-information type; and
wherein obtaining, according to the texture-information type, the picture to-be-processed comprises:
obtaining (1141), according to the texture-information type and the correspondence between the texture-information types and the pictures to-be-processed, the picture to-be-processed from the picture to-be-processed library.

6. The method of claim 1, wherein processing, based on the color information, the picture to-be-processed to generate the target picture comprises:
obtaining (1200), according to the color information of the reference picture, at least one color of the reference picture with a largest proportion;
obtaining (1300) at least one target color by performing color conversion on the at least one color; and
obtaining (1400) the target picture by filling the at least one target color into the picture to-be-processed.

7. The method of claim 6, wherein obtaining, according to the color information of the reference picture, the at least one color of the reference picture with the largest proportion comprises:
converting (121) the reference picture into a spatial color model;
obtaining (122) a proportion of each color of a hue channel of the spatial color model by performing statistics on each color of the hue channel; and
determining (123), according to the proportion of each color of the hue channel, the at least one color with the largest proportion.

8. The method of claim 6, wherein obtaining the at least one target color by performing color conversion on the at least one color comprises:
setting (131) a correspondence between initial colors and converted target colors in advance; and
for each of the at least one color, obtaining (132) a target color corresponding to the color by assigning the color as an initial color and performing conversion according to the correspondence.

9. The method of claim 6, wherein obtaining the target picture by filling the at least one target color into the picture to-be-processed comprises:
obtaining (141) number *k1* of the at least one target color and number *k2* of at least one color channel of the picture to-be-processed, wherein *k1* and *k2* are positive integers;
when *k1* is less than or equal to *k2,* for each unfilled color channel among *k1* color channels of the picture to-be-processed, filling (142) each of the at least one target color into the unfilled color channel; or
when *k1* is greater than *k2,* for each of *k2* color channels, filling (143) the color channel with an unfilled target color among *k2* target colors.

10. The method of claim 9, further comprising:
when *k1* is less than *k2,* after filling, for each unfilled color channel among *k1* color channels of the picture to-be-processed, the target color into the unfilled color channel,
performing (144) conversion, according to a preset color conversion relationship, on at least one of the *k1* target colors, to obtain at least one converted target color; and
for each unfilled color channel among at least one color channel of the picture to-be-processed that is not filled with the target color, filling (145) each of the at least one converted target color into the unfilled color channel.

11. The method of claim 1, wherein processing, based on the color information, the picture to-be-processed to generate the target picture comprises:
processing (307), based on a color optimization algorithm, the color information to obtain target color information; and
processing (308), based on the target color information, the picture to-be-processed to generate the target picture.

12. The method of claim 11, wherein processing, based on the color optimization algorithm, the color information to obtain the target color information comprises:
obtaining (S3071) a luminosity corresponding to the color information; and
processing (S3072), based on the color optimization algorithm, the color information to obtain the target color information when the luminosity is lower than a preset luminosity, wherein a luminosity of the target color information is higher than the preset luminosity.

13. The method of claim 1, wherein extracting the texture information and the color information of the image information comprises:
displaying (S301) the image information;
receiving (S302) a selection operation against the image information;
determining (S303), based on the selection operation, a target image region in the image information; and
extracting (S304) texture information and color information of the target image region.

14. An electronic device (100), comprising:
a processor (110); and
a memory (120), coupled with the processor and storing a program, the program comprising instructions which, when executed by the processor, cause the processor to execute the method of any of claims 1 to 13.

15. A non-transitory computer-readable storage medium (300), storing a computer program which, when executed by a processor, causes the processor to execute the method of any of claims 1 to 13.
